# EUROPEAN PATENT APPLICATION

(11) **EP 3 627 427 A1**
(43) Date of publication of application: **25.03.2020**
(21) Application number: 19198505.0
(22) Date of filing: 20.09.2019
(51) Int. Cl.: G06Q 30/02, H04M 3/51

(54) **LIGHTNING DIALER**

(30) Priority: 24.09.2018 US 201816140228
(71) Applicant: salesforce.com, inc., San Francisco, CA 94105 (US)
(72) Inventor: SCHNEYER, Joshua, San Francisco, CA California 94105 (US); OLIVEROS, Victor Nikolai Carunungan, San Francisco, CA California 94105 (US); ABRAHAMIAN, Annie, San Francisco, CA California 94105 (US); KLEIN, David, San Francisco, CA California 94105 (US)
(74) Representative: Goddar, Heinz J.

(57) **Abstract**

Disclosed herein are system, method, and computer program product embodiments for managing communication between one or more consumers and one or more representatives of an entity. In an embodiment, a mobile device receives a communication from a consumer including first piece of data relating to the consumer, and then presents the first piece of data. The mobile device is thereafter able to receive input comprising a second piece of data relating to the consumer, and then send the second piece of data to a primary server managed by an entity.

## Description

### BACKGROUND

Sales representatives of companies are typically responsible for contacting consumers (e.g., customers and potential customers) while away from the office. As such, sales representatives are typically required to contact consumers using their mobile devices. However, sales representatives must continually contact different consumers and may receive phone calls from these consumers. The contact information of these consumers may or may not be saved in mobile devices of the sales representatives. It can be cumbersome for sales representatives to manage this consumer information while on the road, and to be fully responsive to the consumer needs.

### SUMMARY

The present disclosure relates to computer-implemented methods managing communication between one or more consumers and one or more representatives of an entity. In some embodiments, the computer-implemented method comprises: (i) receiving, by one or more processors, a communication from a consumer including a first piece of data relating to the consumer; (ii) presenting, by the one or more processors, the first piece of data; (iii) receiving, by the one or more processors, input comprising a second piece of data relating to the consumer, the second piece of data being different from the first piece of data; and (iv) sending, by the one or more processors, the second piece of data to a primary server managed by an entity. At least one of the receiving, the presenting, the receiving, and the sending is performed by a mobile device of a representative of the entity. The communication from the consumer is transmitted by a secondary server differ from the primary server.

In other embodiments, the computer-implemented method comprises: (i) receiving, by one or more processors and based on communication from a consumer, a request for data relating to the consumer, the request including the communication from the consumer; (ii) identifying, by the one or more processors and based on the request, data relating to the consumer; (iii) sending, by the one or more processors, the data relating to the consumer to a secondary server; (iv) receiving, by the one or more processors, updated data relating the consumer from a mobile device of a representative of an entity; and (iv) updating, by the one or more processors and based on the received data of the consumer from the mobile device of the representative, the consumer data in the database. At least one of the receiving, the identifying, the sending, the receiving, and the updating is performed by a primary server managed by the entity and different form the secondary server.

### BRIEF DESCRIPTION OF THE DRAWINGS

The accompanying drawings are incorporated herein and form a part of the specification.
FIG. 1 illustrates an exemplary block diagram of a system for an entity to manage communication of one or more consumers and one or more representatives of the entity, according to some embodiments.
FIGs. 2-7 illustrate screenshots of interfaces of a representative's mobile device of the system illustrated in FIG. 1, according to some embodiments.
FIGs. 8 and 9 illustrate exemplary flowcharts illustrating processes for an entity to manage communication of one or more consumers and one or more representatives of the entity, according to some embodiments.
FIG. 10 illustrates an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, apparatus, device, method and/or computer program product embodiments, and/or combinations and sub-combinations thereof, for managing communication of one or more consumers and one or more representatives of an entity. The communication can involve the transfer of data over a communication medium. Thus, the communication can be in the form of messaging and/or phone calls. The consumer can be any individual or company. Along these lines, the consumer can have any relationship with the entity. For example, the consumer can also be a representative of the entity, a manager of the representative, or another individual associated with the entity. Further, the consumer may or may not be a customer. For example, the consumer may be a lead for the representative (e.g., a sales lead). The entity can be an individual or a company that directs a representative to act or speak on behalf of them. The representative can be an employee or independent contract of the entity. As such, the representative may be performing one or more functions for the entity (e.g., sales or service). Thus, the representative can be a sales representative, sales agent, sales manager, account manager, service representative, technical support, recruiting, etc. Along these lines, the representative of the entity may receive and/or transmit data via a mobile device such as, for example, a cellular phone, a smartphone, a tablet computer, a handheld computer, a personal digital assistant, an enterprise digital assistant, or a mobile PC.

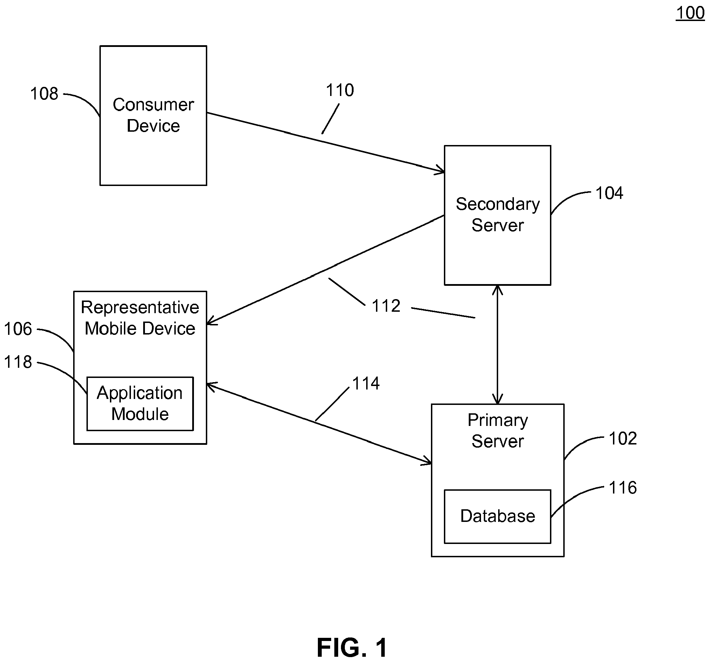

Referring now to FIG. 1, a system 100 for an entity to manage communication of one or more consumers and one or more representatives of the entity is provided. The system 100 comprises at least one of a primary server 102, a secondary server 104, a representative mobile device 106, and a consumer device 108. The primary server 102 may be operated and/or managed by the entity. The secondary server 104 may be operated and/or managed by a third party. The primary server 102 and the secondary server may be in communication with each other. The representative mobile device 106 may be in communication with the primary server 102 and/or the secondary server 104. The consumer device 108 may be in communication with the secondary server 104 and thus may not be in communication with the primary server 102.

The consumer device 108 may transmit data to the secondary server 104 over a first network 110. The first network 110 may be a public network and/or a wide area network. In some embodiments, the consumer device may be a telephone, the communication may be a telephone call, and/or the first network may be a public switched telephone network (PSTN). Upon receipt of the data, the secondary server 104 may communicate with the primary server 102 to receive an appropriate representative mobile device to send the communication from the consumer device 108 and data relating to the consumer to be displayed on the appropriate representative mobile device. The primary server 102 and the secondary server 104 may communicate over a second network 112 different than the first network 110. The second network may comprise Voice over Internet Protocol (VoIP).

In some embodiments, the secondary server 104 may transmit a request to the primary server 102 to receive an appropriate representative mobile device to send the communication from the consumer device 108 and data relating to the consumer to be displayed on the appropriate representative mobile device. After receiving the request, the primary server 102 may query a database 116 comprising data relating to a plurality of consumers and a representative associated with one or more of the consumers. The data relating to the plurality of consumers can be identifying data and/or business data. The identifying data may include one or more of a name, a picture, a place of work, a social security number, a biometric record, a date of birth, a place of birth, a mother's maiden name, and any other data linked or linkable to the consumer device 108 (e.g., medical, education, financial, and employment data). The entity data may be any type of data related to the entity including, for example, business data between the consumer and the entity.

Thus, if the primary server 102 identifies the consumer device 108, the primary server 102 can determine if a representative is associated with the consumer at the consumer device 108. If a representative is associated with the consumer at the consumer device 108, the primary server 102 can send a response to the secondary server 104 comprising such representative and the data to be displayed on the representative mobile device 106. If not, the primary server 102 can select an appropriate representative to associate with the consumer at the consumer device 108 and send a response to the secondary server 104 comprising such representative and the data to be displayed on the representative mobile device 106.

After receiving the appropriate representative for receipt of the communication from the consumer device 108 and the data relating to the consumer to be displayed on the representative mobile device 106, the secondary server 104 may couple this data with the communication from the consumer device 108. Thereafter, the secondary server 104 may send the information relating to the consumer received from the primary server 102 and the communication from the consumer device 108 to the representative mobile device 106. The secondary server 104 may send the information relating to the consumer received from the primary server 102 and the communication from the consumer device 108 to the representative mobile device 106 at the same time and/or in a single transmission. Moreover, this may done over the second network (e.g., VoIP).

The representative mobile device 106 may comprise an application module 118 for receiving the communication and the data relating to the consumer. The application module 118 may perform operations on the representative mobile device 106 according to one or more rules of an application stored on the representative mobile device 106. As such, upon receipt of the communication and the data relating to the consumer, the application module 118 may process this data in the same fashion as if the representative mobile device 106 received it directly from the consumer device 108. For example, the application module 118 may instruct the representative mobile device 106 to receive and process a telephone call from a consumer at the consumer device 106 and display identifying data of the consumer (e.g., name and telephone number) received from the primary server 102 in the same fashion as if the telephone call from the consumer device 108 was routed directly to the representative mobile device 106 and the identifying data was stored on the representative mobile device 106.

During and/or after the communication, the representative mobile device 106 may be in communication with the primary server 102. As such, the representative mobile device 106 may access the data stored in the database 116 of the primary server 102. In some embodiments, the database 116 may be a customer relationship management (CRM) system. As such, the database 116 or the customer relationship management system may be cloud-based. For example, the customer relationship management system may include a variety of CRM categories and systems including, for example, sales, marketing, service, analytics, data, communication, application, and IOT relating to one or more consumers.

Moreover, as stated above, data stored in the database 116 of the primary server 102 may include identification data and entity data. Thus, the representative mobile device 106 may access data relating to the consumer at consumer device 108 and/or data relating to the entity stored on the primary server 102 without it being physically stored on the representative mobile device 106. This can enable the representative mobile device 106 to gain access to a plethora of data relating a wide range of consumers without having to store such data. As such, in some embodiments, the representative mobile device 116 can gain access to data stored on CRM system on the fly including, for example, sales, marketing, and service data of the consumer.

Along these lines, the representative mobile device 106 may communicate with the primary server 102 over a third network 114. The third network 114 may be different than first network 110 and/or the second network 112. For example, the third network 114 may be the same as the first network 110 and different from the second network 112. As such, the third network 114 and first network 110 may be PTSN and the second network 112 may be VoIP. Alternatively, the third network may be different from the first network 110 and the second network 112. As such, the third network 114 may be a private network, the second network 112 may be VoIP, and the first network 110 may be PTSN.

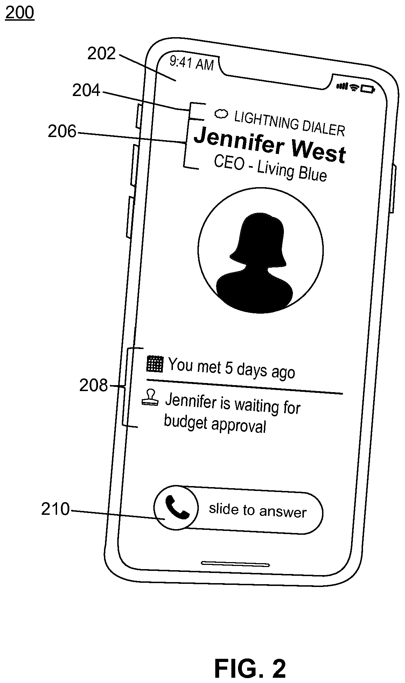

Referring now to FIG. 2, an exemplary interface 200 of a representative mobile device 106 (illustrate in FIG. 1) upon receiving communication in the form of a phone call from a consumer at consumer device 108 (depicted in FIG. 1). The interface 200 comprises a lock screen 202 of the representative mobile device 106. As stated above, the representative mobile device 106 can receive and process communication from the secondary server 104 (shown in FIG. 1) in the same fashion as if the representative mobile device 106 received it directly from the consumer device 108. As such, the lock-screen can display one or more icons unique to communication functions of the representative mobile device and/or one or more icons unique to communication functions of an application stored on the representative mobile device. Icons unique to communication functions of the representative mobile device include a mechanism for answering the representative mobile device 210. Icons unique to communication functions of the application stored on the representative mobile device comprise name of the application receiving the communication 204 (e.g., Lightning Dialer), personal information of the consumer 206 (e.g., a name, a title, and an image), and personal notes of the consumer 208 (e.g., last time met and status of corresponding business). This allows sales representatives to readily know which consumer is contacting them and pertinent information relating to the consumer without any of the consumer's information being stored on their mobile device.

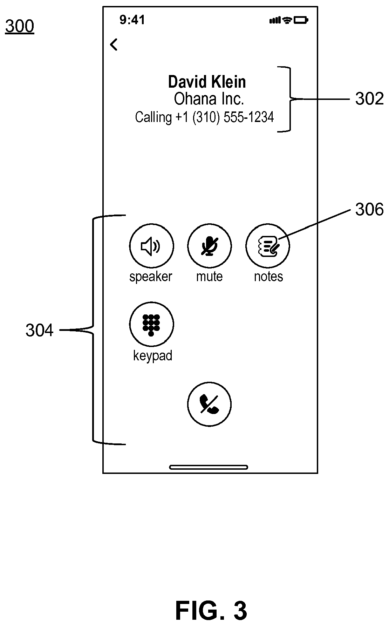

Referring now to FIG. 3, an exemplary interface 300 of a representative mobile device 106 (illustrated in FIG. 1) after receiving a communication in the form of a phone call from a consumer at consumer device 108 (depicted in FIG. 1) is provided. The interface 300 may be a main call screen of the representative mobile device 106. Thus, the interface 300 may include identification data of the consumer 302, one or more icons unique to communication functions of the representative mobile device 304, and/or one or more icons unique to communication functions of an application stored on the representative mobile device 306 as discussed above. As stated above, the identification data of the consumer 302 may not be stored on the representative mobile device 106, rather on the primary server 102 (depicted in FIG. 1). As illustrated, the icons unique to communication functions of the representative mobile device 304 may include a speaker icon, a mute icon, a keypad icon and/or a hang-up icon, and the icon unique to the application stored on the representative mobile device 306 may be a notes icon.

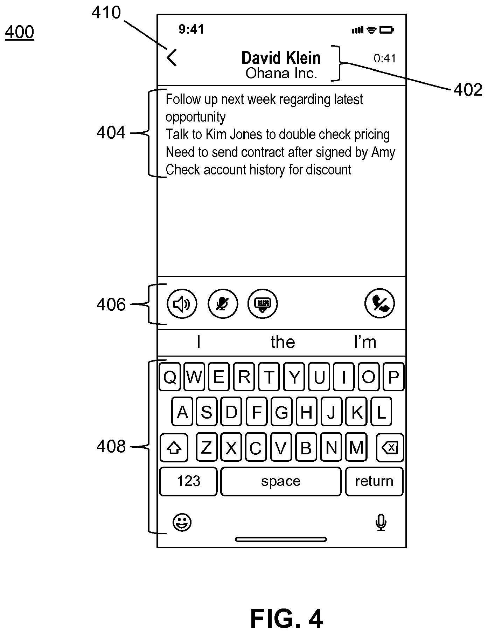

Referring now to FIG. 4, an exemplary interface 400 of a representative mobile device 106 (illustrated in FIG. 1) after selection of the notes icon 306 (depicted in FIG. 3) is provided. The interface 400 may include identifying data of the consumer 402, notes relating to the consumer 404, one or more icons unique to communication functions of the representative mobile device 406, and a keypad to enter notes 408. The identifying data of the consumer 402 and the notes relating to the consumer 404 may be different than the identifying data of the consumer 302 and the icons 304, before selection of the notes icon 306 (each depicted in FIG. 3). The notes relating to the consumer 404 may be those stored by the entity and/or entered by the representative. Along these lines, the notes relating to the consumer 404 can be data relating to the entity (e.g., business products / activities), the consumer (e.g., identify data), and/or personal notes of the representative.

As such, before, during and/or after the phone call with the consumer, previously stored notes may be automatically displayed. This can include entity data (e.g., business activities relating to the consumer) and identify data of the consumer. Along these lines, additional notes may be entered during and/or after the phone call. Moreover, added notes may be automatically saved after the phone call ends and/or after the representative returns to a previous screen as discussed above. As such, by permitting sales representatives to add notes on their mobile device during or immediately after communication with the consumer, they no longer have to manually enter them into the entity's central system.

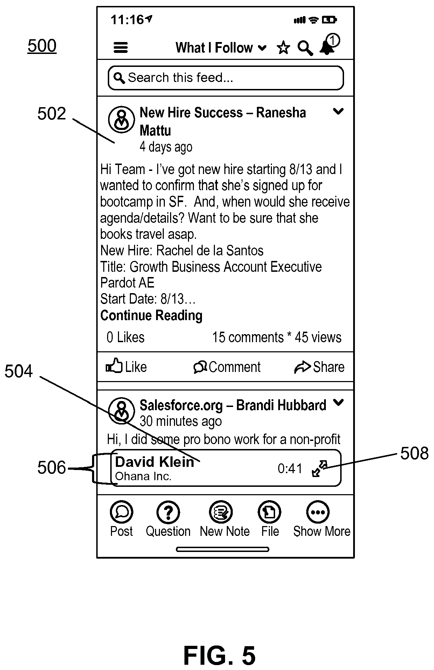

Referring now to FIG. 5, an exemplary interface 500 of a representative mobile device 106 (illustrated in FIG. 1) upon running an application 502 stored on the representative mobile device 106. The application 502 may be the application receiving the communication and identifying data from the consumer routed through the secondary server 104, or it may be a different application therefrom. The interface 500 may comprise a status bar 504 overlaying the application. The status bar 504 may comprise data of the consumer 506 (e.g., identifying data of the consumer) and a link to a previous interface of the representative mobile device 508. The data of the consumer 504 may include identifying data (e.g., a name and a place of business). The previous interface may be the interface 300 (shown in FIG. 3) or the interface 400 (depicted in FIG. 3).

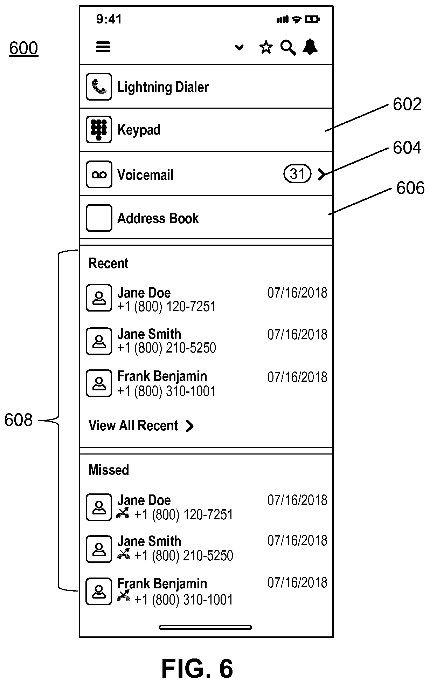

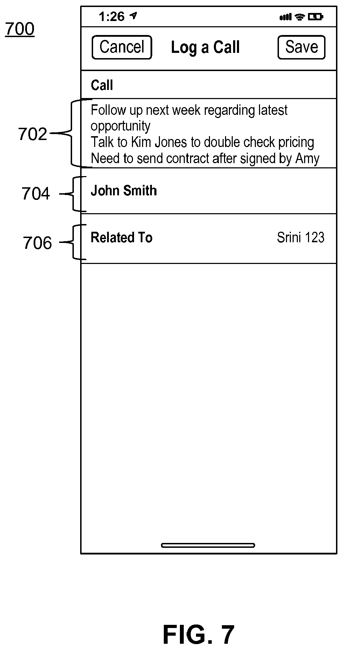

Referring now to FIGs. 6 and 7, exemplary interfaces 600, 700 of the application stored on the representative mobile device 106 (illustrated in FIG. 1) receiving the communication and identifying data from the consumer routed through the secondary server 104 (depicted in Fig. 1). As stated above, the representative mobile device 106 may be in communication with the primary server 102 (depicted in FIG. 1) during and/or after receipt of the communication and data of the consumer received from the secondary server 104.

Referring now to FIG. 6, the interface 600 may comprise one or more of a keypad 602, a voicemail database 604, an address book 606, and a phone call history 608. The keypad 602 may permit a representative to make a phone call through the application in the same fashion as through the keypad of the mobile device itself. Accordingly, upon entering a contact number of a consumer into the keypad 602, identifying data of the consumer may be presented to the representative (e.g., as illustrated in FIGs 2-4). Along these lines, the address book 604 linked to the primary server 102 (depicted in FIG. 1) and thus may have access to contact information of a plurality of consumers. As such, the address book 606 may have access to contact of one or more consumers not stored on the representative mobile device 106. Likewise, the voicemail 604 and the phone call history 608 may present identifying data of a consumer (e.g., contact information) not stored on the representative mobile device 106. Moreover, the application can be assigned a unique phone number associated the entity. The phone number can be different from that of the phone number assigned to the representative mobile device. This can permit consumer to identify the representative and/or the entity. Additionally, the application can store one or more prerecorded voicemails. As such, when contacting a consumer and receiving their voicemail, the sales representation can select (e.g., drag and drop) one of the voicemails to be recorded onto the consumer's voicemail. This will them to not record the same voicemails over-and-over again to different consumers and thus save them time.

Referring now to FIG. 7, the interface 700 can permit the representative of the entity to log a previous call. The interface 700 can comprise a mode of communication 702, notes 704, identification data of the consumer 706 (e.g., a name - John Smith), and entity data relating to the consumer 708 (e.g., entity product - Srini 123). The notes 702 can be those previously entered during the phone call as described with respect to FIGs. 3 and 4 and/or entered after the phone call. The entity data relating to the consumer 608 can be business data such as a business product.

As stated previously, before, during, and/or after communication with the consumer, the notes 704, the identification data of the consumer 706, and/or the entity data relating to the consumer 708 can be automatically pulled from the primary server 102 (illustrated in FIG. 1). Along these lines, before, during, and/or after communication with the consumer, , the notes 704, the identification data of the consumer 706, and/or the entity data relating to the consumer 708 can be automated logged into the primary server 102. Moreover, the notes 704, the identification data of the consumer 706, and/or the entity data relating to the consumer 708 can be manually inputted by the representative during and/or after the call.

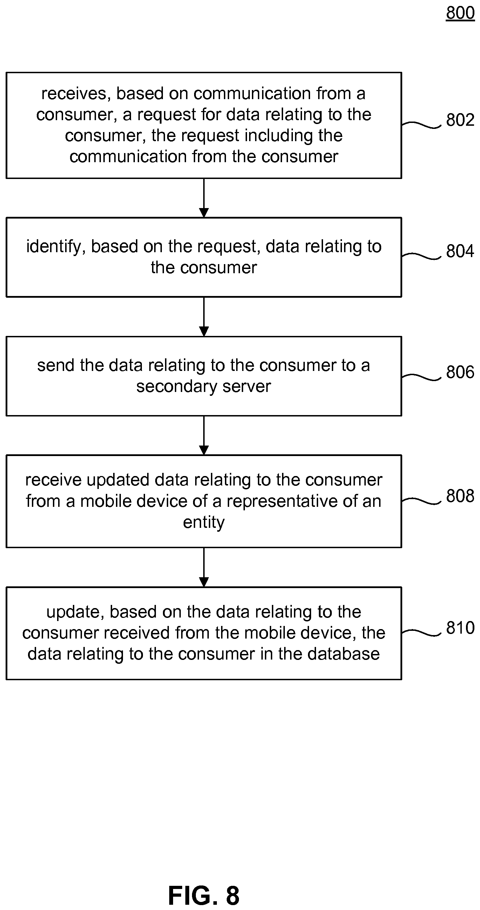

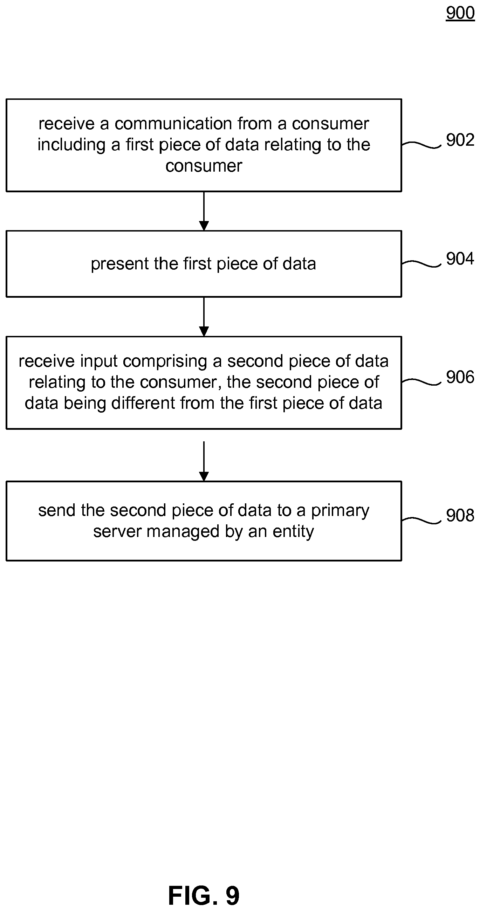

FIGs. 8 and 9 illustrate flowcharts for methods 800, 900 for managing communication of one or more consumers and one or more representatives of an entity, according to some embodiments. Methods 800, 900 may be performed by processing logic that may comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIGs. 8 and 9 as will be understood by a person of ordinary skill in the art.

Referring now to FIG. 8, method 800 shall be described with reference to FIG. 1. However, method 800 is not limited to that example embodiment.

In 802, a primary server 102 that is managed by an entity receives, based on communication from a consumer, a request for data relating to the consumer. The request including the communication from the consumer. The request may be received over a first network (e.g., PTSN).

In 804, the primary server 102 identifies, based on the request, data relating to the customer. The database may include identify data and entity data relating to each of a plurality of consumers. The request may be transmitted over a second network different from the first network. The second network may be VoIP.

In 806, the primary server 102 sends the data relating to the consumer to a secondary server different than the primary server.

In 808, the primary server 102 receives updated data of the consumer from a mobile device of a representative of an entity. The updated data may be transmitted over the first network.

In 810, the primary server 102 updates based on the data relating to the consumer from the representative received by the mobile device, the consumer data in the database. As such, the database may incorporate the updated data into its current data relating to the consumer.

Referring now to FIG. 9, method 900 shall be described with reference to FIG. 1. However, method 900 is not limited to that example embodiment.

In 902, a representative's mobile device 106 receives a communication from a consumer including a first piece of data relating to the consumer. The communication may be received over a first network (e.g., PTSN).

In 904, the representative mobile device 106 presents the first piece of data relating to the consumer. The first piece of data may be identifying data relating to the consumer.

In 906, the representative mobile device 106 receives input comprising a second piece of information relating to the consumer. The second piece of information being different than the first piece of information.

In 908, the representative mobile device 106 sends the second piece of information to a server. The server maintains a database comprising consumer data and updates the database based on the second piece of information.

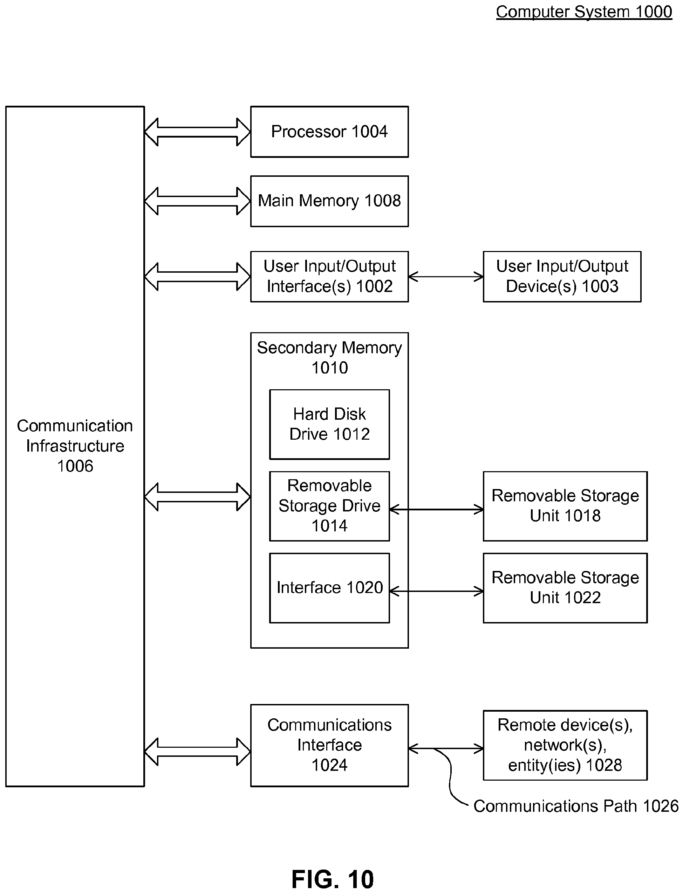

Various embodiments may be implemented, for example, using one or more well-known computer systems, such as computer system 1000 shown in FIG. 10. One or more computer systems 1000 may be used, for example, to implement any of the embodiments discussed herein, as well as combinations and sub-combinations thereof.

Computer system 1000 may include one or more processors (also called central processing units, or CPUs), such as a processor 1004. Processor 1004 may be connected to a communication infrastructure or bus 1006.

Computer system 1000 may also include representative input/output device(s) 1003, such as monitors, keyboards, pointing devices, etc., which may communicate with communication infrastructure 1006 through user input/output interface(s) 1002.

One or more of processors 1004 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 1000 may also include a main or primary memory 1008, such as random access memory (RAM). Main memory 1008 may include one or more levels of cache. Main memory 1008 may have stored therein control logic (i.e., computer software) and/or data.

Computer system 1000 may also include one or more secondary storage devices or memory 1010. Secondary memory 1010 may include, for example, a hard disk drive 1012 and/or a removable storage device or drive 1014. Removable storage drive 1014 may be a floppy disk drive, a magnetic tape drive, a compact disk drive, an optical storage device, tape backup device, and/or any other storage device/drive.

Removable storage drive 1014 may interact with a removable storage unit 1018. Removable storage unit 1018 may include a computer usable or readable storage device having stored thereon computer software (control logic) and/or data. Removable storage unit 1018 may be a floppy disk, magnetic tape, compact disk, DVD, optical storage disk, and/ any other computer data storage device. Removable storage drive 1014 may read from and/or write to removable storage unit 1018.

Secondary memory 1010 may include other means, devices, components, instrumentalities or other approaches for allowing computer programs and/or other instructions and/or data to be accessed by computer system 1000. Such means, devices, components, instrumentalities or other approaches may include, for example, a removable storage unit 1022 and an interface 1020. Examples of the removable storage unit 1022 and the interface 1020 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1000 may further include a communication or network interface 1024. Communication interface 1024 may enable computer system 1000 to communicate and interact with any combination of external devices, external networks, external entities, etc. (individually and collectively referenced by reference number 1028). For example, communication interface 1024 may allow computer system 1000 to communicate with external or remote devices 1028 over communications path 1026, which may be wired and/or wireless (or a combination thereof), and which may include any combination of LANs, WANs, the Internet, etc. Control logic and/or data may be transmitted to and from computer system 1000 via communication path 1026.

Computer system 1000 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 1000 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1000 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 1000, main memory 1008, secondary memory 1010, and removable storage units 1018 and 1022, as well as tangible articles of manufacture embodying any combination of the foregoing. Such control logic, when executed by one or more data processing devices (such as computer system 1000), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 10. In particular, embodiments may operate with software, hardware, and/or operating system implementations other than those described herein.

It is to be appreciated that the Detailed Description section, and not any other section, is intended to be used to interpret the claims. Other sections may set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the Figures and/or described herein. Further, embodiments (whether or not explicitly described herein) have signify utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries may be defined as long as the specified functions and relationships (or equivalents thereof) are appropriately performed. Also, alternative embodiments may perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments may be described using the expression "coupled" and "connected" along with their derivatives. These terms are not necessarily intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

The breadth and scope of this disclosure should not be limited by any of the above-described exemplary embodiments, but should be defined only in accordance with the following claims and their equivalents.

## Claims

1. A computer-implemented method, comprising:
receiving, by one or more processors and based on communication from a consumer, a request for data relating to the consumer, the request including the communication from the consumer;
identifying, by the one or more processors and based on the request, data relating to the consumer;
sending, by the one or more processors, the data relating to the consumer to a secondary server;
receiving, by the one or more processors, updated data relating to the consumer from a mobile device of a representative of an entity; and
updating, by the one or more processors and based on the data relating to the consumer received from the mobile device, the data relating to the consumer in the database,
wherein at least one of the receiving, identifying, sending, receiving, and updating is performed by a primary server managed by the entity and different from the secondary server.

2. The method of claim 1, wherein the request for data is transmitted by the secondary server to the mobile device of the representative of the entity.

3. The method of claim 1 or 2, wherein the secondary server is configured to receive the communication directly from the consumer over a first network.

4. The method of claim 3, wherein the primary server is configured to communicate with the secondary server over a second network different from the first network.

5. The method of claim 4, wherein the secondary server is configured to transmit the data relating to the consumer over the second network and/or wherein the secondary server is configured to transmit the data relating to the consumer and the communication to the mobile device over the second network.

6. The method of one of the previous claims, wherein the data relating to the consumer in the request is different from data relating to the consumer stored on the mobile device and/or wherein the data relating to the consumer in the request comprises identification information of the consumer.

7. The method of one of the previous claims, wherein the incoming communication is a phone call.

8. A computer-implemented method, comprising:
receiving, by one or more processors, a communication from a consumer including a first piece of data relating to the consumer;
presenting, by the one or more processors, the first piece of data;
receiving, by the one or more processors, input comprising a second piece of data relating to the consumer, the second piece of data being different from the first piece of data; and
sending, by the one or more processors, the second piece of data to a primary server managed by an entity,
wherein at least one of the receiving, presenting, receiving, and sending is performed by a mobile device of a representative of the entity, and
wherein the communication from the consumer is transmitted by a secondary server different from the primary server.

9. The method of claim 8, wherein the secondary server is configured to receive the communication from the consumer.

10. The method of claim 9, wherein the mobile device is connected to the primary server and the secondary server over the first network and the second network, respectively; or the primary server and the secondary server communicate over the second network.

11. The method of one of claims 8 to 10, wherein the first piece of data is received, and the second piece of data is sent, by a third party application stored on the mobile device.

12. The method of claim 11, the presenting of the first piece of data further comprising:
presenting the first piece of data to the representative of mobile device such that the first piece of data was received directly by the mobile device.

13. The method of one of claims 8 to 12, the receiving of the second piece of data further comprising:
accessing, by the one or more processors, a database stored on the primary server,
wherein the database comprises data relating to the consumer including the first piece of data, wherein optionally the server is configured to update the database based on the second piece of data inputted on the mobile device.

14. The method of claim 13, wherein the first piece of data is identifying information and is presented while the mobile device receives the communication from the consumer, or
wherein the second piece of data is received while the mobile device is receiving the communication from the consumer.

15. The method of one of claims 8 to 14, wherein the communication from the consumer is a phone call.
